Europäisches Patentamt

European Patent Office

Office européen des brevets

(19)

(11) Numéro de publication : **0 020 203**
**B1**

(12) # FASCICULE DE BREVET EUROPÉEN

(45) Date de publication du fascicule du brevet :
28.04.82

(51) Int. Cl.³ : **C 08 J 3/22, C 08 L 95/00**

(21) Numéro de dépôt : 80400585.8

(22) Date de dépôt : 29.04.80

(54) Compositions bitumes-polymères et procédé pour les préparer.

(30) Priorité : 02.05.79 FR 7910987

(43) Date de publication de la demande :
10.12.80 (Bulletin 80/25)

(45) Mention de la délivrance du brevet :
28.04.82 Bulletin 82/17

(84) Etats contractants désignés :
BE CH DE GB LI

(56) Documents cités :
GB - A - 2.025 986

(73) Titulaire : VIAFRANCE Société anonyme française
dite:
6, avenue Percier
F-75008 Paris (FR)

(72) Inventeur : Sainton, Alain
Abbeville La Riviere
F-91150 Etampes (FR)

(74) Mandataire : Cuer, André
CABINET CUER 30, rue de Léningrad
F-75008 Paris (FR)

Imprimerie Jouve, 18, rue St-Denis, 75001 Paris, France

# 0 020 203

## Compositions bitumes-polymères et procédé pour les préparer

La présente invention a trait au domaine de la modification de liants hydrocarbonés tels que bitumes, asphaltes, goudrons, par des élastomères, avec vulcanisation au soufre pour l'obtention d'enduits industriels et de bitumes routiers ou analogues. Elle concerne plus particulièrement un procédé d'obtention de compositions vulcanisées, à base de bitume et de copolymères styrène-butadiène.

Il est connu depuis longtemps d'incorporer aux bitumes, afin d'améliorer leurs propriétés mécaniques et de satisfaire aux normes requises pour l'emploi comme liants, divers élastomères comme par exemple des copolymères blocs, séquencés ou non, de type : butadiène-styrène, parfois dénommé : styrène-butadiène-styrène. Après vulcanisation au soufre, on obtient des produits présentant une bonne viscoélasticité et conservant leurs caractéristiques mécaniques à basse température, par exemple de l'ordre de $-10\,°C$ — (voir par exemple le brevet français n° 76 39233).

La réalisation de tels mélanges bitumes-polymères pose cependant des problèmes relatifs notamment à l'homogénéité et à la longue durée de malaxage. Par exemple, même dans les conditions les plus favorables connues à ce jour, il faut maintenir les mélanges sous agitation pendant au moins deux heures, généralement trois à quatre heures, à température de l'ordre de 150-190 °C, pour parvenir à une correcte homogénéité avant l'addition de l'agent vulcanisant au soufre.

L'invention permet d'obvier à ces inconvénients et propose un procédé de confection de mélanges bitumes-élastomères, en particulier à base de copolymères blocs butadiène-styrène, permettant d'obtenir une excellente homogénéité en des temps très courts, inférieurs à une heure et de fabriquer des produits doués de très bonnes caractéristiques mécaniques.

Selon la caractéristique principale de l'invention, le bitume est mélangé au copolymère butadiène-styrène non pas à l'état de perles ou agrégats analogues mais sous la forme d'une solution-mère obtenue par agitation, à température de 120 à 180 °C du copolymère en question dans un milieu constitué par une coupe lourde à caractère essentiellement aromatique, issue du craquage de fraction pétrolière. Le produit est ensuite additionné de 0,2 à 2 % environ de soufre pendant que l'on maintient l'agitation dans la gamme de température précitée.

Il a en outre été trouvé, et cela constitue une autre caractéristique de l'invention, que l'on améliorait encore les résultats visés par l'invention en utilisant comme solution-mère une association de la coupe lourde précitée avec une coupe d'huile de houille à base de chrysène et de phénanthrène.

Grâce à l'utilisation de tels solvants, on facilite considérablement la mixtion et la compatibilité de l'élastomère avec le bitume et l'homogénéité des mélanges avant addition de soufre est assurée très rapidement, en un temps de l'ordre de une demi-heure seulement.

Les copolymères blocs butadiène-styrène utilisés selon l'invention sont bien connus et ont généralement des teneurs en styrène de l'ordre de 15 à 55 % en poids et des teneurs en butadiène de 45 à 85 %. Ils peuvent être séquencés avec des poids moléculaires de l'ordre de 100 000 ou plus, ou non séquencés pour des masses moléculaires plus faibles.

La coupe lourde à caractère aromatique est de préférence constituée par un résidu de craquage à la vapeur, en raffinerie, de fractions issues de la distillation directe de bruts pétroliers. La mise en œuvre d'un tel produit est d'autant plus intéressante qu'il s'agit d'un déchet que l'on a, jusqu'ici, tenté de valoriser quelque peu uniquement par l'utilisation comme combustible.

La coupe spéciale d'huile de houille est constituée essentiellement d'un mélange d'huile de chrysène et d'huile de phénanthrène et constitue un produit bien connu en soi mais qui jusqu'ici n'a trouvé que des applications très spécifiques.

En pratique, la dissolution du copolymère bloc butadiène-styrène dans le liant hydrocarboné composé de la ou des deux coupes précitées se fait par agitation, de préférence mais non exclusivement en vase clos, à température de 120° à 180 °C, généralement maintenue vers 150-160 °C, pendant environ une demi-heure. Le copolymère est introduit sous forme de poudre ou de perle selon les commercialisations courantes. La proportion de cet élastomère est généralement de l'ordre de 5 à 30 % en poids par rapport au poids total de liant.

Après le court temps d'homogénéisation et alors que le mélange précité est encore agité vers 150-160 °C on effectue la vulcanisation par incorporation d'une petite quantité de soufre, comprise entre 0,2 et 2 % par exemple 0,5 % environ), de préférence sous forme élémentaire telle que paillettes, poudre ou analogues. L'opération est rapide et terminée après une vingtaine de minutes environ. Bien entendu, la viscosité du produit obtenu peut être modulée par l'apport, au cours du malaxage, de produits fluxants appropriés, issus de la distillation du pétrole ou de la houille.

La solution-mère vulcanisée peut alors s'incorporer aux bitumes classiques par simple mélange, sans nécessité de conditions spéciales et de longues durées d'homogénéisation comme dans les techniques connues jusqu'ici. La proportion de bitume à incorporer est variable selon les caractéristiques finales désirées mais elle est en tout cas nettement inférieure à celle habituellement mise en œuvre, en l'absence des coupes susdéfinies qui jouent avantageusement et à bas prix le rôle de liants hydrocarbonés. Dans les cas les plus fréquents on peut mettre en œuvre de 5 à 80 parties (en poids) de solution-mère pour 95 à 20 parties de bitume.

Les bitumes élastomères obtenus selon l'invention présentent, par rapport aux bitumes traités par polymères et déjà connus, un plus grand intervalle de plasticité et possèdent des caractéristiques mécaniques nettement améliorées, en particulier aux températures inférieures à 0 °C, de l'ordre par exemple de − 5 à − 20 °C. Ils se prêtent avantageusement, avec des performances accrues, aux utilisations courantes des bitumes-élastomères telles que : enduits superficiels, fabrication d'enrobés pour les chaussées, bitumes industriels pour étanchéité.

Les exemples suivants cités à titre illustratif seulement, montrent comment l'invention peut être mise en pratique. Sauf indications contraires les pourcentages et les parties des composants sont exprimés en poids.

## Exemples

a) On a préparé une solution-mère en mélangeant, à 160 °C, 75 parties d'un résidu issu du craquage à la vapeur de coupes pétrolières et présentant les caractéristiques suivantes :

densité à 18 °C : 1,14 ; point éclair : 135 °C.

Point de flamme : 140 °C ; viscosité dynamique (en mPa.s à 100 °C) : 26 ;

Viscosité BRTA pour un diamètre de tube de 10 mm à 25 °C : 60 secondes, avec 15 parties d'un mélange de 50 % d'huile de chrysène et 50 % d'huile de phénanthrène. Le mélange a été ajouté à 10 parties d'un copolymère bloc styrène-butadiène-styrène bi-séquencé de poids moléculaire égal à 110 000.

Après une demi-heure de brassage, on a incorporé 0,5 % de soufre solide (en paillettes ou en poudre). La réaction avec le soufre a duré environ vingt minutes à température comprise entre 150 et 160 °C. On peut dire, d'une façon générale, que trente minutes après l'incorporation du soufre, les solutions élastomères préparées selon l'invention étaient prêtes à l'emploi.

De telles solutions ont alors été mélangées à des bitumes comme il sera indiqué ci-après.

b) On a également préparé une autre solution-mère vulcanisée au soufre dans les mêmes conditions de température et de temps que pour a) mais en utilisant uniquement comme milieu le résidu de vapocraquage de mêmes caractéristiques que ci-dessus, sans mettre en œuvre la coupe d'huile de houille.

Les proportions utilisées étaient : 90 parties de coupe aromatique pour 10 parties (poids) de copolymère bloc styrène-butadiène-styrène, le soufre étant ensuite ajouté à 160 °C à raison de 0,5 % en poids du total.

c) Afin de pouvoir comparer les propriétés rhéologiques et mécaniques de tous les produits et/ou mélanges mis en œuvre, on a effectué des séries de mesures sur les compositions suivantes :

— exemple 1 : solution-mère vulcanisée du type b) ci-dessus,
— exemple 2 : même solution que b) mais non vulcanisée au soufre,
— exemple 3 : coupe de vapocraquage seule, selon b), sans copolymère SBS ni vulcanisation au soufre,
— exemple 4 : solution-mère vulcanisée de type a) ci-dessus,
— exemple 5 : même solution que a) mais non vulcanisée au soufre,
— exemple 6 : mélange de coupe de vapocraquage et d'huile de houille selon a), sans copolymère SBS ni vulcanisation au soufre,
— exemple 7 : bitume seul de coefficient de pénétration 40/50,
— exemple 8 : bitume seul de coefficient de pénétration 60/70,
— exemple 9 : bitume seul de coefficient de pénétration 80/90,
— exemple 10 : composition bitume-polymère obtenue par mélange de 80 parties de bitume 40/50 avec 20 parties de la solution élastomérique obtenue selon l'exemple 4,
— exemple 11 : composition bitume-polymère obtenue par mélange de 90 parties de bitume 40/50 avec 10 parties de la solution élastomérique obtenue selon l'exemple 4.

L'ensemble des caractéristiques mesurées a été reporté sur tableau 1 qui suit, selon les normes suivantes :
— Point de ramollissement test bille et anneau : norme NF T 66.008 et ASTM D 36-26.
— Pénétration (ou pénétrabilité) : norme NF T 66.004 et ASTM D 5-61.
— Point de fragilité Fraas : norme IP 80-53.

Les résultats consignés dans ce tableau montrent bien les avantages apportés par les compositions bitumes-polymères selon l'invention. On notera en particulier la très nette amélioration de la cohésivité, notamment aux basses températures, apportée par les compositions des exemples 10 et 11 selon l'invention par rapport aux bitumes seuls (exemples 7, 8, 9).

(Voir Tableau I, p. 4)

# 0 020 203

## TABLEAU I

| Exemples N° | Pénétration en 1/10 mm | Test bille et anneau en °C | Point de Fraas en °C | Viscosité (en mPa.s) à 160 °C | Cohésivité du liant (en kgm/cm²) | | | | | |
|---|---|---|---|---|---|---|---|---|---|---|
| | | | | | Températures (en °C) | | | | | |
| | | | | | − 23 °C | + 5 °C | + 18 °C | + 30 °C | + 40 °C | + 55 °C |
| 1 | à 0 °C 120 | 34,5 | — | 2 100 | 3 | 24,5 | 14,5 | 5 | 2,3 | 0,4 |
| 2 | à 0 °C 150 | 23 | — | 350 | 2,1 | 8,5 | 8 | 5,3 | 1,0 | 0,3 |
| 3 | à 0 °C 400 | non mesurable | — | 8 | 1,3 | 7,4 | 1,5 | 0 | 0 | 0 |
| 4 | à 0 °C 150 | 31 | — | 2 000 | 5 | 32 | 11 | 5 | 1 | 0,5 |
| 5 | à 0 °C 180 | 18 | — | 300 | 2,5 | 13 | 6 | 2 | 0,25 | 0 |
| 6 | à 0 °C 450 | non mesurable | — | 7,5 | 1 | 6,5 | 0,2 | 0 | 0 | 0 |
| 7 | à 25 °C 40 | 54 | − 10 °C | 195 | 0,4 | 1 | 2 | 2,3 | 3,5 | 6,2 |
| 8 | à 25 °C 68 | 50 | − 16 °C | 170 | 0,5 | 0,9 | 1,7 | 2,0 | 2,9 | 3,8 |
| 9 | à 25 °C 82 | 47 | − 18 °C | 140 | 0,5 | 0,9 | 1,8 | 2,2 | 3,3 | 1,1 |
| 10 | à 25 °C 132 | 45 | − 16 °C | 150 | 1,7 | 2,5 | 3,3 | 4,4 | 15 | 3,5 |
| 11 | à 25 °C 70 | 49 | − 15 °C | 170 | 1,5 | 2,2 | 2,8 | 3,5 | 8,0 | 9,8 |

## Revendications

1. Procédé de préparation de compositions bitumes-polymères par mélange avec un bitume d'une solution-mère à base de copolymère bloc butadiène-styrène, caractérisé en ce que la solution-mère est obtenue par agitation à température de 120 à 180 °C du copolymère butadiène-styrène dans un milieu constitué par une coupe lourde à caractère essentiellement aromatique issue du craquage de coupe pétrolière, le produit obtenu étant ensuite additionné de 0,2 à 2 % de soufre pendant que l'on maintient l'agitation dans la gamme de température précitée.

2. Procédé selon la revendication 1, caractérisé en ce que ladite coupe lourde aromatique est un résidu de craquage, en raffinerie, de fractions issues de la distillation directe de bruts pétroliers.

3. Procédé selon la revendication 1, caractérisé en ce que ladite coupe lourde aromatique est associée à une coupe d'huile de houille à base de chrysène et de phénanthrène.

4. Procédé selon l'une quelconque des revendications 1 à 3, caractérisé en ce que l'agitation du copolymère dans la ou lesdites coupes est faite à 150-160 °C pendant une demi-heure environ en introduisant 5 à 30 parties (poids) de copolymère pulvérulent dans 100 parties dudit milieu.

5. Procédé selon l'une quelconque des revendications 1 à 4, caractérisé en ce que l'incorporation au bitume de la solution-mère vulcanisée au soufre est faite par simple mélange de 5 à 80 parties (poids) de cette dernière pour 95 à 20 parties de bitume.

6. Compositions bitumes-polymères obtenues selon l'une quelconque des revendications 1 à 5, et utilisables comme enduits superficiels, masses plastiques pour la fabrication d'enrobés routiers et bitumes industriels.

4

## Claims

1. Method for preparing bitumen-polymer compositions wherein a butadiene-styrene block copolymer based mother solution is mixed with a bitumen, characterized in that the mother solution is obtained by stirring at a temperature between 120 to 180 °C a butadiene-styrene copolymer in a medium consisting of a heavy essentially aromatic cut resulting from the cracking of a petroleum cut, the product being then added with from 0,2 to 2 % sulphur whereas stirring is continued, the temperature being kept within the above mentioned range.

2. Method according to claim 1, characterized in that said heavy aromatic cut is a refinery cracking residue of fractions resulting from the direct distillation of oil crudes.

3. Method according to claim 1, characterized in that said heavy cut is mixed with a chrysene and phenanthrene based coal oil cut.

4. Method according to any of claims 1 to 3, characterized in that the stirring of the copolymer in said cut(s) is carried out at 150-160 °C for about half an hour whereas 5 to 30 parts by weight of powdery copolymer are introduced into 100 parts of said medium.

5. Method according to any of claims 1 to 4, characterized in that the incorporation into bitumen of the sulphur vulcanized mother solution is carried out by simply mixing from 5 to 80 parts by weight of the mother solution with from 95 to 20 parts of bitumen.

6. Bitumen-polymer compositions which are obtained according to any of claims 1 to 5 and which are usable as superficial coatings, plastic masses for making roadway coverings and industrial bitumens.

## Ansprüche

1. Verfahren zur Herstellung von Bitumen-Polymerenzusammensetzungen durch Mischen einer Mutterlösung, welche als Grundbestandteil ein Butadien-Styrol-Mischpolymerisat enthält, mit einem Bitumen, dadurch gekennzeichnet, dass die Mutterlösung durch Rühren des Butadien-Styrol-Mischpolymerisates in einem Mittel, welches aus einer schweren, wesentlich aromatischen Fraktion besteht, die aus der Krackung einer Erdölfraktion stammt, bei einer Temperatur von 120° bis 180 °C erhalten wird, wobei dem erhaltenen Produkt sodann unter fortgesetztem Rühren im obenangegebenen Temperaturbereich von 0,2 bis 2 % Schwefel zugesetzt werden.

2. Verfahren gemäss Anspruch 1, dadurch gekennzeichnet, dass die obengenannte schwere aromatische Fraktion ein Raffineriespaltrückstand von Fraktionen ist, welche von der direkten Destillation von Rohölen stammen.

3. Verfahren gemäss anspruch 1, dadurch gekennzeichnet, dass die obengenannte schwere aromatische Fraktion mit einem als grundbestandteil Phenanthren und Chrysen enthaltendem Kohlenöl vermischt ist.

4. Verfahren gemäss einem der Ansprüche 1 bis 3, dadurch gekennzeichnet, dass das Rühren des Mischpolymerisates in der oder den obengenannten Fraktionen bei 150-160 °C ungefähr eine halbe Stunde lang durchgeführt wird, wobei 5 bis 30 Gewichtsteile des pulverförmigen Mischpolymerisates in 100 Teile des genannten Mittels eingeführt werden.

5. Verfahren gemass einem der Ansprüche 1 bis 4, dadurch gekennzeichnet, dass das Inkorporieren den mit Schwefel vulkanisierten Mutterlösung in den Bitumen durch einfaches Mischen von 5 bis 80 Gewichtsteilen Mutterlösung mit 95-20 Teilen Bitumen geschieht.

6. Bitumen-Polymerenzusammensetzungen welche gemäss einem der Ansprüche 1 bis 5 erhalten werden und als Oberflächenüberzüge, plastische Massen zur Herstellung von Strassendecken und Industriebitumen verwendbar sind.